# EUROPEAN PATENT APPLICATION

(11) **EP 4 057 408 A2**
(43) Date of publication of application: **14.09.2022**
(21) Application number: 22160821.9
(22) Date of filing: 08.03.2022
(51) Int. Cl.: H01M 10/04, H01M 50/105

(54) **APPARATUS FOR MANUFACTURING BATTERY CELL**

(30) Priority: 09.03.2021 KR 20210030622; 25.02.2022 KR 20220025120
(71) Applicant: SK On Co., Ltd., Seoul 03188 (KR)
(72) Inventor: CHOI, Gil Yong, 34124 Daejeon (KR); KIM, Joo Hyung, 34124 Daejeon (KR); KIM, Hyung Joon, 34124 Daejeon (KR)
(74) Representative: Stolmár & Partner Patentanwälte PartG mbB

(57) **Abstract**

An apparatus for manufacturing a battery cell may include: a carrier transporting a battery cell to a worktable, wherein the carrier includes: a first plate pressing one surface of the battery cell; a second plate pressing the other surface of the battery cell opposite to the one surface; a clamping member pressing the first plate and the second plate in a direction in which the first plate and the second plate face each other; and a position alignment part disposed in at least one of the first plate and the second plate and aligning a position of at least one of the first plate and the second plate with respect to the worktable.

## Description

### CROSS-REFERENCE TO RELATED APPLICATION

This application claims benefit of priority to Korean Patent Application No. 10-2021-0030622 filed on March 9, 2021 and No. 10-2022-0025120 filed on February 25, 2022 in the Korean Intellectual Property Office, the disclosure of which is incorporated herein by reference in its entirety.

### BACKGROUND

### 1. FIELD

The present disclosure relates to an apparatus for manufacturing a battery cell.

### 2. DESCRIPTION OF RELATED ART

Recently, secondary batteries, which are rechargeable and dischargeable, have been widely used as an energy source for wireless mobile devices. In addition, secondary batteries have attracted attention as a power source for electric vehicles (EVs) and hybrid electric vehicles (HEVs) for reducing air pollution caused by existing gasoline and diesel vehicles.

Typically, according to conventional manufacturing processes for making battery cells, the battery cells are moved from one location to another through a transfer device. A conventional transfer device moves the battery cells in a state in which the battery cells are held by vacuum force. However, when a surface of a battery cell is uneven and not flat, a problem may arise in that the battery cell may not be held stably by the transfer device. Also, the battery cell may not be positioned to the new location properly, and a facility operation rate may be lowered.

Thus, an improved manufacturing process and apparatus are needed to overcome the aforementioned problems associated with the conventional technology.

### SUMMARY

An aspect of the present disclosure may increase the efficiency and reliability of a manufacturing process of a battery cell.

An aspect of the present disclosure is directed to an improved process for folding the joint part of the casing of the battery cell. The folding operation may be performed more efficiently and stably.

Another aspect of the present invention is directed to an apparatus for performing the folding operation.

Yet another aspect of the present invention is directed to an improved carrier apparatus which is capable to stably carry the battery cell through the various steps of the manufacturing process and facilitates the folding of the joint part of the battery cell while protecting the battery cell from being damaged in the process.

According to an aspect of the present disclosure, an apparatus for manufacturing a battery cell may include: a carrier transporting a battery cell to a worktable, wherein the carrier includes: a first plate pressing one surface of the battery cell; a second plate pressing the other surface of the battery cell opposite to the one surface; a clamping member pressing the first plate and the second plate in a direction in which the first plate and the second plate face each other; and a position alignment part disposed in at least one of the first plate and the second plate and aligning a position of at least one of the first plate and the second plate with respect to the worktable.

the first plate and the second plate face each other in a first direction, and at least a portion of the casing of the battery cell protrudes in a second direction perpendicular to the first direction outward of the first plate and the second plate.

The position alignment part may include a first alignment recess formed in one side surface of the first plate; and a second alignment recess formed in another side surface of the first plate that is opposite to the one surface of the first plate.

The first alignment recess and the second alignment recess may be arranged in a direction perpendicular to a direction in which the first plate and the second plate face each other.

The apparatus may further include a first alignment member having an end portion inserted into the first alignment recess; and a second alignment member having an end portion inserted into the second alignment recess, wherein the end portion of the first alignment member and the end portion of the second alignment member may have different shapes.

The end portion of the first alignment member may include two first inclined surfaces in contact with each other to form a first angle, the first alignment recess may include two second inclined surfaces in contact with each other to form the first angle, and the two first inclined surfaces may be in contact with the two second inclined surfaces, respectively.

The end portion of the second alignment member may include a curved surface.

The clamping member may include a guide shaft extending from the first plate and penetrating through the second plate; and an elastic member connected to the guide shaft and pressing the second plate toward the first plate.

The clamping member may further include a friction reducing member disposed between the second plate and the guide shaft.

An outer surface of the friction reducing member may be coupled to the second plate, and an inner surface of the friction reducing member may be in contact with the guide shaft.

The clamping member may further include a stopper disposed at an end portion of the guide shaft, and the elastic member may be disposed between the stopper and the second plate.

The apparatus may further include a buffer pad disposed in at least one of spaces between the first plate and the battery cell and between the second plate and the battery cell, and the buffer pad is disposed to be in contact with the battery cell.

The buffer pad may include a foamed sponge.

The apparatus may further include folding device disposed side by side with the carrier in the second direction for bending the at least portion of the casing of the battery cell which protrudes in the second direction outward of the first and the second plates.

The carrier may further include a protection member disposed between the first plate and the second plate and preventing the folding device from colliding with a body portion in which an electrode assembly of the battery cell is accommodated.

The protective member may be disposed on at least one side of the battery cell, and a length of the protective member in the second direction may be equal to or greater than a length of the first plate and the second plate in the second direction.

According to another aspect of the present invention, an apparatus for manufacturing a battery cell having a body part and a sealing part, may include: a carrier for transporting a battery cell from a first worktable to a second worktable, wherein the carrier includes: a first plate; a second plate; at least one buffer pad attached to at least one of the first plate and the second plate; a clamping member pressing the first plate and the second plate against each other for securely fixing the battery cell inside the carrier with the at least one buffer pad being in direct contact with the battery cell; and a position alignment part for aligning a position of at least one of the first plate and the second plate with respect to the second worktable.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 schematically illustrates a folding process of a battery cell according to an embodiment;
FIG. 2 illustrates a pouch-type battery cell;
FIG. 3 illustrates a process in which a joint part of a battery cell is deformed according to a folding process according to an embodiment;
FIG. 4 is a front view of a carrier according to an embodiment;
FIG. 5 is an exploded view of a carrier according to an embodiment;
FIG. 6 is a side view of a carrier according to an embodiment;
FIG. 7 is a top view of a carrier according to an embodiment;
FIG. 8 is a rear view of a carrier according to an embodiment;
FIG. 9 illustrates a state before a carrier is aligned on a worktable in an embodiment; and
FIG. 10 illustrates a state in which a carrier is aligned on the worktable in an embodiment.

### DETAILED DESCRIPTION

Embodiments of the present disclosure will now be described in detail with reference to the accompanying drawings.

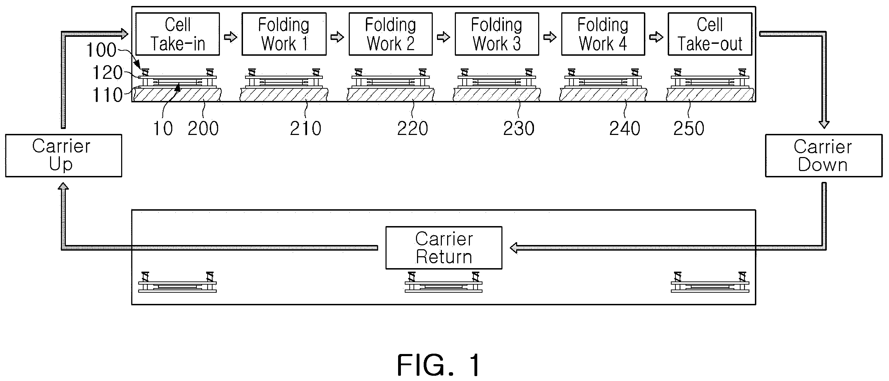

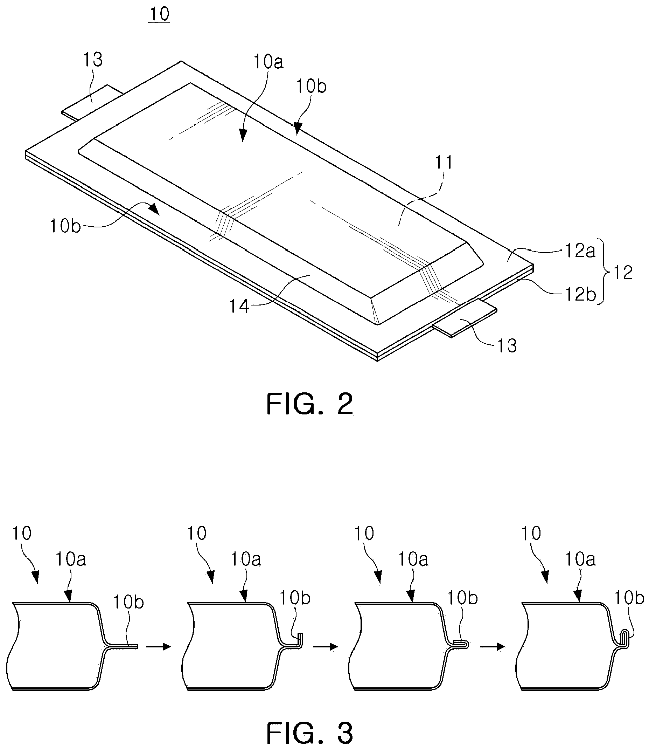

FIG. 1 schematically illustrates a folding process of a battery cell 10 according to an embodiment. FIG. 2 illustrates a pouch-type battery cell 10. FIG. 3 illustrates a process in which a joint part of the battery cell 10 is deformed according to a folding process according to an embodiment. Hereinafter, a folding process of the battery cell 10 will be described with reference to FIGS. 1 to 3.

Referring first to FIG. 2, the battery cell 10 includes an electrode assembly 11 and a casing 12 (or a pouch) surrounding the electrode assembly 11. The electrode assembly 11 is provided in a form in which a positive electrode plate, a negative electrode plate, and an electrolyte are sequentially stacked, and may further include a separator between the positive electrode plate and the negative electrode plate.

The casing 12 is provided in the form of enclosing the electrode assembly 11 to configure the exterior of the battery cell 10, and may protect the electrode assembly 11 from external impact. In addition, the casing 12 may seal the electrode assembly 11 from the outside. The battery cell 10 includes an electrode tab 13 extending in a longitudinal direction, and the electrode tab 13 is connected to an electrode plate (a positive electrode plate or a negative electrode plate) of the electrode assembly 11.

The casing 12 may be provided in the form of sandwiching the electrode assembly 11 from both sides. For example, the casing 12 may include a first casing 12a surrounding an upper portion of the electrode assembly 11 and a second casing 12b surrounding a lower portion of the electrode assembly 11. An inner portion of the casing 12 surrounds the electrode assembly 11, and a peripheral portion of the casing 12 may be bonded to a peripheral portion of the opposite casing 12. For example, the first casing 12a and the second casing 12b are bonded to each other at an edge portion.

In some embodiments, the first casing 12a and the second casing 12b may be provided as a single casing 12. For example, the casing 12 may include a folded portion, and may be divided into a first casing 12a and a second casing 12b with the folded portion as a boundary.

In some embodiments, the battery cell 10 may be divided into a body portion 10a and a sealing portion 10b. The body portion 10a refers to a portion having a thickness corresponding to the electrode assembly 11. A cross-section of the body portion 10a may include an electrode assembly 11 and a casing 12 covering both sides of the electrode assembly 11. The sealing portion 10b refers to a thin portion extending in the longitudinal direction (or in a direction perpendicular to a stacking direction) from the body portion 10a. For example, the cross-section of the sealing portion 10b may include two-fold casings (e.g., the first casing 12a and the second casing 12b) bonded to each other.

Referring to FIG. 1, the folding process is performed by a worktable and a folding device corresponding to the battery cell 10 folding process. Folding of the sealing portion 10b may be performed through two or more folding processes. Referring to FIG. 1, the battery cell 10 goes through four folding processes, and each folding process is performed by the corresponding worktables 210, 220, 230, and 240 and a folding device.

For example, referring to FIG. 3, the sealing portion 10b may be folded by about 90 degrees in a first folding process close to the body portion 10a through several steps, and folded by 90 degrees again in a second folding process so as to be folded by 180 degrees. Finally, the sealing portion 10b may be positioned adjacent to a sidewall 14 of the body portion 10a.

In FIG. 1, the folding process is illustrated as including four folding processes, but this is only an example, and the folding process may include two folding processes or five or more folding processes.

Referring to FIG. 1, in some embodiments, the battery cell 10 undergoes a folding process, while being clamped to the carrier 100. In addition, the transfer device does not directly transfer the battery cell 10, but indirectly transfers the battery cells 10 by transferring a carrier 100. The carrier 100 may be coupled to the transfer device in various manners, such as a vacuum suction pad, a clamping device, and the like. Accordingly, the battery cell 10 may be transferred relatively stably.

Referring to FIG. 1, the folding process of the battery cell 10 includes a first step of preparing the carrier 100, a second step of clamping the battery cell 10 to the carrier 100, a third step of folding the sealing portion 10b (see FIG. 2) of the battery cell 10 clamped to the carrier 100 at least once, and a fourth step of separating the battery cell 10 from the carrier 100 after the folding process is completed.

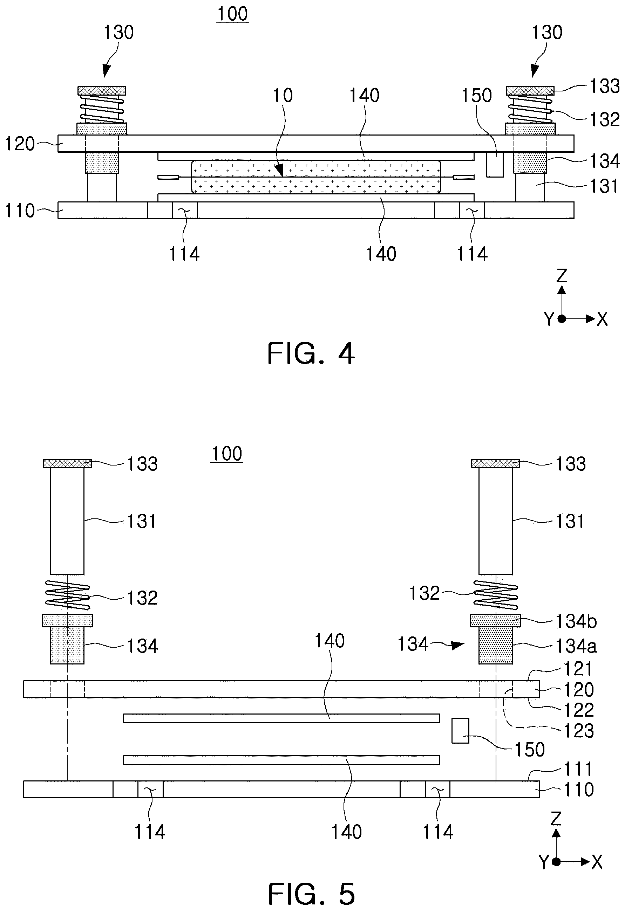

In some embodiments, the carrier 100 includes two plates 110 and 120 for holding the battery cell 10 from both sides, and the battery cell 10 goes through the folding process in a state of being sandwiched between the two plates 110 and 120. Details of the structure of the carrier 100 will be described with reference to FIGS. 4 to 8. In a state in which the two plates 110 and 120 are spaced apart from each other, the battery cell 10 is positioned between the two plates, and then a gap between the plates 110 and 120 is reduced to clamp (or fix) the battery cell 10 to the carrier 100.

In some embodiments, the second step of positioning the battery cell 10 on the carrier 100 may include a step of spacing the two plates 110 and 120 of the carrier 100, a step of positioning the battery cell 10 between the two plates 110 and 120, and clamping the battery cell 10 by narrowing the gap between the two plates 110 and 120 again.

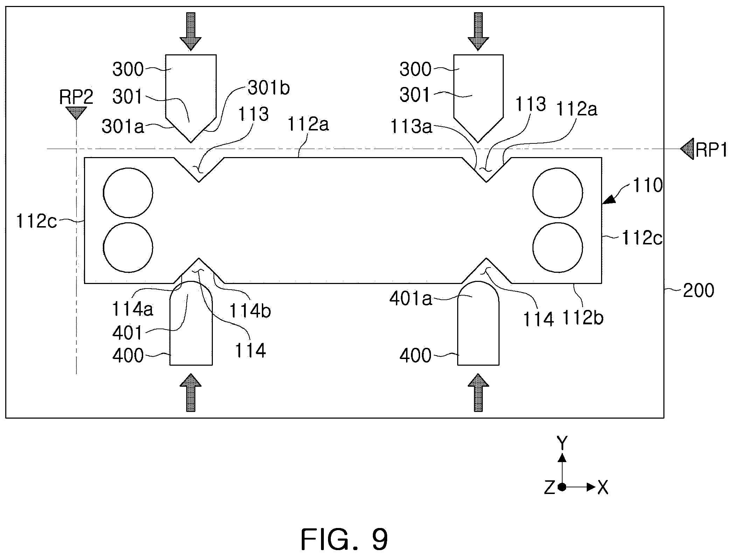

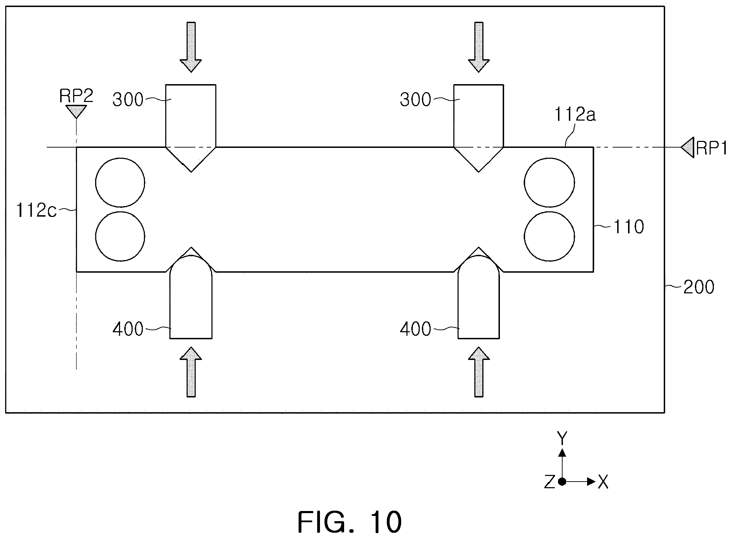

In some embodiments, the second step may include aligning the carrier 100 and the battery cell 10 in a facility or equipment. In some embodiments, the second step may further include aligning the carrier 100 to a specific position of the worktable 200. The alignment process of the carrier 100 with respect to the worktable 200 will be described in detail with reference to FIGS. 9 and 10.

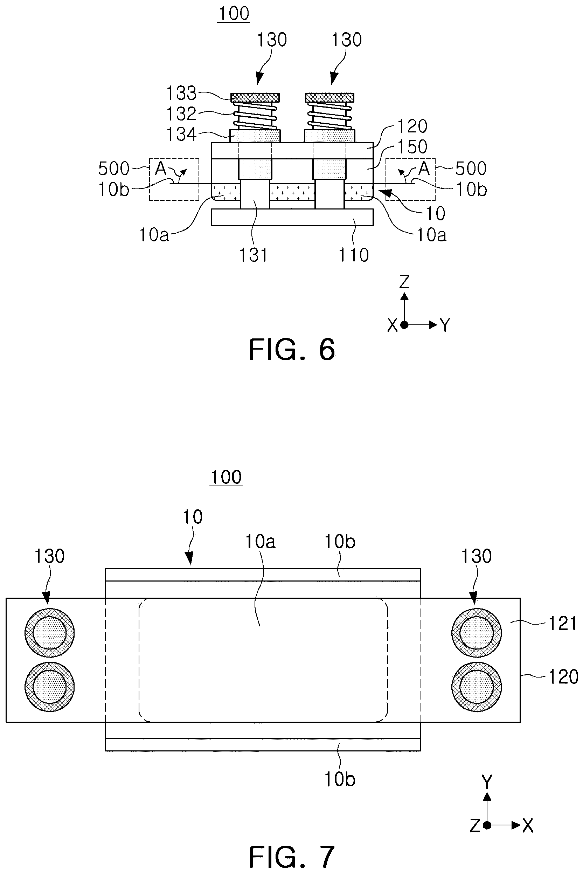

In some embodiments, the second step may further include aligning the battery cell 10 to a specific position of the carrier 100. For example, a process of aligning the center of the battery cell 10 to be positioned at the center of the carrier 100 may be performed. For another example, referring to FIG. 6 or FIG. 7, the battery cell 10 may be aligned in the carrier 100 such that the sealing portion 10b of the battery cell 10 protrudes outward from the plates 110 and 120.

In some embodiments, when the sealing portion 10b is folded several times in the third step, the third step further includes a process of transferring the sealing portion 10b to a different worktable for each folding. Referring to FIG. 1, the worktables 210 to 240 correspond to the foldings referred to as folding work 1, folding work 2, folding work 3 and folding work 4. For example, when the second folding process is performed (see Folding Work 2) after the first folding process (See folding Work 1) is completed, the battery cell 10 clamped to the carrier 100 is transferred from the first worktable 210 to the second worktable 220. Every time the battery cell 10 is transferred to one of the worktables 210 to 240, and before the folding operation is performed, a step of aligning the battery cell 10 to a specific position of the worktable is performed. The alignment process of the carrier 100 is described in detail with reference to FIGS. 9 and 10.

Since the battery cell 10 is fixed to the carrier 100, the battery cell 10 may be aligned to a specific position on the worktable by adjusting the position of the carrier 100. For example, the second folding process to the fourth folding process may include disposing the battery cell 10 (i.e., the carrier 100) at a specific position on the worktables 210 to 240 before a full-scale folding process. Accordingly, the battery cell 10 may be disposed at an accurate position with respect to the folding device, and the sealing portion 10b of the battery cell 10 may be folded relatively accurately.

In some embodiments, the fourth step of separating the battery cell 10 from the carrier 100 is a step of spacing the two plates 110 and 120 of the carrier 100 and taking out the battery cell 10 from between the two plates 110 and 120.

FIG. 1 schematically illustrates a folding facility. The folding facility may be divided into an upper facility and a lower facility. In the upper facility, the folding process for the battery cell 10 clamped to the carrier 100 is performed, and the empty carrier 100 is transferred to a starting position of the folding process through the lower facility.

The process performed in the upper facility includes a cell take-in process of clamping the battery cell 10 to the carrier 100, a folding work of folding the battery cell 10, while transferring the battery cell 10 with the carrier 100 sequentially through the folding worktables 210 to 240, and a cell take-out process of taking out the battery cell 10 from the carrier 100 after the completion of the folding. The empty carrier 100 is then lowered to the lower facility and is returned (or transferred) to the front of the lower facility. The empty carrier 100 rises to the upper facility, and a new battery cell 10 enters the empty carrier 100 again to be transferred through the plurality of the folding worktables 210-240.

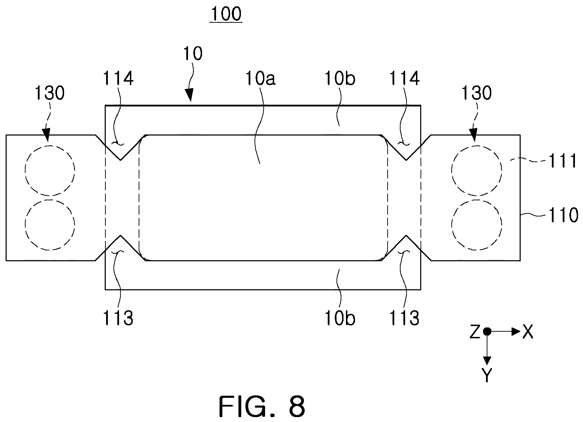

FIGS. 4 to 8 illustrate the carrier 100 which is used for clamping the battery cell 10 in the folding process described in FIG. 1. FIG. 4 is a front view of the carrier 100 according to an embodiment. FIG. 5 is an exploded view of the carrier 100 according to an embodiment. FIG. 6 is a side view of the carrier 100 according to an embodiment. FIG. 7 is a top view of the carrier 100 according to an embodiment. FIG. 8 is a rear view of the carrier 100 according to an embodiment.

In some embodiments, the carrier 100 is configured to clamp the battery cell 10. When the carrier 100 clamps the battery cell 10, the battery cell 10 may be fixed to the carrier 100.

In some embodiments, the carrier 100 may include a base plate 110 (or a first plate), a pressure plate 120 (or a second plate) spaced apart from the base plate 110, and a clamping member 130. In a state in which the battery cell 10 is positioned between the base plate 110 and the pressure plate 120, the two plates 110 and 120 press the battery cell 10 from both sides by the clamping member 130. The battery cell 10 may be fixed to the carrier 100 by the friction force between the top and bottom surfaces of the battery cell 10 and the plates 110 and 120, respectively.

In some embodiments, the clamping member 130 may be configured such that the pressure plate 120 and the base plate 110 press the battery cell disposed therebetween in the stacking direction (i.e., a Z direction). In some embodiments, the clamping member 130 may include a guide shaft 131 extending from the base plate 110 and an elastic member 132 providing a pressing force. The elastic member 132 may be provided in the form of, for example, a coil spring.

The guide shaft 131 may be fixedly coupled to the base plate 110. The guide shaft 131 is fitted into a hole of the pressure plate 120, and the pressure plate 120 may move in an extending direction (e.g., the Z-axis direction) of the guide shaft 131 with respect to the base plate 110.

In some embodiments, a stopper 133 configured to prevent the coil spring from falling out of the guide shaft 131 is disposed at an end portion of the guide shaft 131. For example, the stopper 133 may be provided in the form of a disk having an outer diameter greater than that of the guide shaft 131. The elastic member 132 may be configured such that one end is supported by the stopper 133 and the other end presses the pressure plate 120.

In some embodiments, the carrier 100 may have a friction reducing member serving as a bearing between the pressure plate 120 and the guide shaft 131. For example, as shown in FIG. 4, the friction reducing member may include a guide bushing 134. However, the configuration of the friction reducing member is not limited to that shown in the drawings, and any element capable of reducing the friction force between the pressure plate 120 and the guide shaft 131 may be used.

In some embodiments, the guide bushing 134 is provided in a cylindrical shape including a hollow interior or hole. The guide shaft 131 is fitted into the hollow interior of the guide bushing 134. When the guide bushing 134 is provided in a cylindrical shape, an outer circumferential surface may be coupled to the pressure plate 120, and an inner circumferential surface may be configured to contact the guide shaft 131.

The guide bushing 134 may reduce a friction force occurring between the pressure plate 120 and the guide shaft 131 when the pressure plate 120 moves along the guide shaft 131. A lubricant such as grease may be applied to the inner circumferential surface of the guide bushing 134. In this case, a lower end of the elastic member 132 may be located at an upper end of the guide bushing 134.

Referring to FIG. 5, the guide bushing 134 may further include a cylinder portion 134a into which the guide shaft 131 is fitted and a flange portion 134b extending radially from an end portion of the cylinder portion 134a. The flange portion 134b may have a larger outer diameter than the cylinder portion 134a. The cylinder portion 134a may be fitted into the hole 123 of the pressure plate 120, and the flange portion 134b may be seated on an upper surface 121 of the pressure plate 120. Meanwhile, the guide bushing 134 is a component for smoother relative movement between the two plates 110 and 120 and may be omitted in other embodiments.

In some embodiments, the carrier 100 may include a buffer pad 140 in a portion in contact with the battery cell 10. For example, the buffer pad 140 may be disposed on a top surface 111 of the base plate 110 facing the battery cell 10 and/or a bottom surface 122 of the pressure plate 120.

At least one of the base plate 110 and the pressure plate 120 may press the battery cell 10 via the buffer pad 140.

In some embodiments, the buffer pad 140 may include a foam sponge. However, the material of the buffer pad 140 is not limited thereto. The buffer pad 140 may be deformed into a shape corresponding to a surface of the battery cell 10. The buffer pad 140 may be deformed to correspond to the surface of the battery cell 10 to be in close contact with the battery cell. Therefore, even if the surface of the battery cell 10 is uneven, the battery cell 10 may be stably fixed inside the carrier 100 with the use of one or more buffer pads 140.

In some embodiments, the carrier 100 may include a cell protection member 150. The cell protection member 150 may be located on at least one side of the battery cell 10.

The cell protection member 150 may prevent the folding device 500 from colliding with the body portion 10a of the battery cell 10.

Referring to FIG. 6, the folding device 500 may be disposed on at least one side of the carrier 100. For example, the folding device 500 may be disposed side by side with the carrier 100 in a direction perpendicular to a direction in which the base plate 110 and the pressure plate 120 face each other.

The folding device 500 may be configured to bend at least a portion (e.g., a sealing portion) of the casing of the battery cell 10. For example, the folding device 500 may hold the sealing portion 10b of the battery cell 10 and rotate in a clockwise or counterclockwise direction to bend the sealing portion 10b.

In order to prevent the folding device 500 from colliding with the body portion 10a of the battery cell 10 in the process of bending the sealing portion 10b of the battery cell 10, the folding device 500 may be configured to collide first with the cell protection member 150 before colliding with the body portion 10a. That is, the cell protection member 150 may limit a driving range of the folding device 500 to prevent an impact from being applied to the body portion 10a by the folding device 500.

A width of the cell protection member 150 may be equal to or greater than a width of the body portion 10a of the battery cell 10. Alternatively, the width of the cell protection member 150 may be the same as or greater than the width of the base plate 110 and the pressure plate 120. The "width" referred to herein may refer to a length in a Y-axis direction of FIG. 6.

To prevent interference from occurring in the process of clamping the battery cell 10, a height of the cell protection member 150 may be equal to or smaller than a thickness of the body portion 10a of the battery cell 10. As used herein, "height" or "thickness" may refer to a length in the Z-axis direction of FIG. 6. The sealing portion 10b of the battery cell 10 is folded in the arrow direction A, while passing through the folding device 500. When the folding device 500 collides with the body portion 10a of the battery cell 10, the battery cell 10 may be damaged. In some embodiments, the folding device 500 may be configured to first collide with the cell protection member 150 positioned in front of the battery cell 10 during the folding process, and if there is an abnormality, a measure may be taken before the battery cell 10 is damaged. For example, when the folding device 500 and the cell protection member 150 interfere, a position of the folding device 500 in the Y-axis direction may be adjusted or a notification indicating that there is an abnormality in the folding process may be generated.

Referring to FIGS. 7 and 8, in some embodiments, the carrier 100 may be configured to expose the sealing portion 10b of the battery cell 10 to the outside. Referring to FIG. 6, the sealing portion 10b may be exposed to the outside of the carrier 100 in order for the folding device 500 to fold the sealing portion 10b of the battery cell 10.

As shown in FIG. 7, the width of the pressure plate 120 of the carrier 100 may be substantially the same as the width of the body portion 10a of the battery cell 10. As shown in FIG. 8, the width of the base plate 110 of the carrier 100 may be substantially the same as the width of the body portion 10a of the battery cell 10. The 'width' referred to herein may refer to a length in the Y-axis direction of FIG. 7 or 8.

In some embodiments, in a state in which the battery cell 10 is accommodated in the carrier 100, when the carrier 100 is viewed in the Z-axis direction, the sealing portion 10b of the battery cell 10 may protrude to the outside of both plates 110 and 120. In addition, the body portion 10a of the battery cell 10 may not protrude to the outside of both plates 110 and 120. The sealing portion 10b protruding to the outside of the carrier 100 is folded toward the body portion 10a through a folding process.

Referring to FIG. 1, the step of initially accommodating the battery cell 10 in the carrier 100 further includes aligning the battery cell 10 with respect to the carrier 100, and in this case, the battery cell 10 may be arranged to be disposed in the form as in FIG. 6 or FIG. 7 with respect to the carrier 100.

In some embodiments, the carrier 100 may include a position alignment part for guiding position alignment of at least one of the base plate 110 and the pressure plate 120. The position alignment part may guide the carrier to be aligned in an accurate position, while the folding process is performed.

In some embodiments, the position alignment part may include alignment recesses 113 and 114 disposed in at least one of the base plate 110 and the pressure plate 120. For example, as shown in FIG. 8, one or more alignment recesses 113 and 114 may be disposed on at least one side of the base plate 110 of the carrier 100.

The alignment recesses 113 and 114 may be wedge-shaped recesses recessed inward from the side surfaces 112a and 112b of the base plate 110 as shown in FIG. 9. However, the shape of the alignment recesses 113 and 114 is not limited thereto.

The alignment recesses 113 and 114 may include one or more first alignment recesses 113 and second alignment recesses 114 respectively disposed on both side surfaces 112a and 112b of the base plate 110. The first alignment recess 113 and the second alignment recess 114 may be aligned with each other in a width direction of the base plate 110.

The alignment recesses 113 and 114 may guide a correct position of the carrier 100 during the folding process. Hereinafter, the position alignment of the carrier 100 will be described in detail with reference to FIGS. 9 to 10.

FIG. 9 illustrates a state before the carrier 100 is aligned to the worktable 200. FIG. 10 illustrates a state in which the carrier 100 is aligned to the worktable 200. In FIGS. 9 and 10, the battery cell 10, the clamping member 130, and the pressure plate 120 disposed on the base plate 110 are not illustrated for convenience of description.

Referring to FIGS. 9 to 10, the carrier 100 may include the alignment recesses 113 and 114. In some embodiments, the alignment recesses 113 and 114 are provided on the side surfaces 112a and 112b of the base plate 110 so that the carrier 100 is aligned at an accurate position in the folding process. However, the positions of the alignment recesses 113 and 114 are not limited to the illustrated ones, and for example, the alignment recesses 113 and 114 may be disposed on the other side surface 112c of the base plate 110.

Referring to FIGS. 9 and 10, the carrier 100 alignment process may include a first step in which the first alignment member 300 is moved to a designated position and a second step in which the carrier 100 is pushed by a second alignment member 400 to be in close contact with the first alignment member 300. The first and second alignment members 300 and 400 may be movably connected with the worktable 200. In some embodiments, the first step and the second step may be performed simultaneously. For example, when the first alignment member 300 moves to a designated position, the second alignment member 400 may push the carrier 100 simultaneously.

For example, in a state in which the first alignment member 300 is moved to the designated position, the second alignment member 400, in a state of being partially accommodated in the second alignment recess 114, pushes the carrier 100 in a +Y direction. Accordingly, the carrier 100 moves in the +Y direction until the first alignment recess 113 comes into contact with an end portion 301 of the first alignment member 300, and is finally aligned at the designated position.

In some embodiments, the first alignment recess 113 may be provided in a shape corresponding to the end portion 301 of the first alignment member 300. In some embodiments, when viewed in the Z-axis direction, the end portion 301 of the first alignment member 300 is provided in a V shape having a first angle, and the first alignment recess 113 may be provided in the V shape having the first angle. For example, the end portion 301 of the first alignment member 300 may include a first inclined surface 301a and a second inclined surface 301b forming the first angle, and the first alignment recess 113 may be defined as a space between a third inclined surface 113a and a fourth inclined surface 113b forming the first angle.

In some embodiments, an end portion of the second alignment member 400 may be provided in a shape different from that of the second alignment recess 114. In some embodiments, the end portion 401 of the second alignment member 400 may be provided in a U-shape having a curved surface, and the second alignment recess 114 may be provided in a V-shape. For example, the second alignment recess 114 may be defined as a space between a fifth inclined surface 114a and a sixth inclined surface 114b.

In some embodiments, the first alignment member 300 and the first alignment recess 113 may be in surface contact, and the second alignment member 400 and the second alignment recess 114 may be in point contact (or line contact).

In some embodiments, a user may accurately dispose the carrier 100 at a desired position by adjusting the position of the first alignment member 300. That is, after adjusting the Y-axis and X-axis positions of the first alignment member 300 based on a first reference line RP1 and a second reference line RP2, the first alignment recess 113 of the carrier may be adjusted with the first alignment member 300, so that the X-axis and Y-axis positions of the carrier may be accurately aligned with the reference lines RP1 and RP2. Accordingly, the carrier 100 may always be aligned at a predetermined position, and the folding process may be performed at a predetermined position of the battery cell.

As set forth above, according to embodiments of the present invention disclosure, the present invention increases the efficiency and reliability of the manufacturing process of the battery cell. Specifically, the present invention is capable to more accurately and stably perform the folding of the sealing portion of the casing of the pouch-type battery cell in the manufacturing process of the pouch-type battery cell.

While only a few embodiments have been shown and described above, it will be apparent to those skilled in the art that modifications and variations of these embodiments could be made without departing from the scope of the present disclosure as defined by the appended claims.

## Claims

1. An apparatus for manufacturing a battery cell, the apparatus comprising:
a carrier transporting a battery cell to a worktable,
wherein the carrier includes:
a first plate pressing one surface of the battery cell;
a second plate pressing the other surface of the battery cell opposite to the one surface;
a clamping member pressing the first plate and the second plate in a direction in which the first plate and the second plate face each other; and
a position alignment part disposed in at least one of the first plate and the second plate and aligning a position of at least one of the first plate and the second plate with respect to the worktable.

2. The apparatus of claim 1, wherein the first plate and the second plate face each other in a first direction, and at least a portion of the casing of the battery cell protrudes in a second direction perpendicular to the first direction outward of the first plate and the second plate.

3. The apparatus of claim 1, wherein
the position alignment part includes:
a first alignment recess formed in one side surface of the first plate; and
a second alignment recess formed in another side surface of the first plate that is opposite to the one surface of the first plate.

4. The apparatus of claim 3, wherein the first alignment recess and the second alignment recess are arranged in a direction perpendicular to the direction in which the first plate and the second plate face each other.

5. The apparatus of claim 3, further comprising:
a first alignment member having an end portion inserted into the first alignment recess; and
a second alignment member having an end portion inserted into the second alignment recess,
wherein the end portion of the first alignment member and the end portion of the second alignment member have different shapes.

6. The apparatus of claim 5, wherein
the end portion of the first alignment member includes two first inclined surfaces in contact with each other to form a first angle,
the first alignment recess includes two second inclined surfaces in contact with each other to form the first angle, and
the two first inclined surfaces are in contact with the two second inclined surfaces, respectively.

7. The apparatus of claim 5, wherein the end portion of the second alignment member includes a curved surface.

8. The apparatus of claim 1, wherein
the clamping member includes:
a guide shaft extending from the first plate and penetrating through the second plate; and
an elastic member connected to the guide shaft and pressing the second plate toward the first plate.

9. The apparatus of claim 8, wherein the clamping member further includes a friction reducing member disposed between the second plate and the guide shaft, and
wherein an outer surface of the friction reducing member is coupled to the second plate, and an inner surface of the friction reducing member is in contact with the guide shaft..

10. The apparatus of claim 8, wherein
the clamping member further includes a stopper disposed at an end portion of the guide shaft, and
the elastic member is disposed between the stopper and the second plate.

11. The apparatus of claim 1, further comprising a buffer pad disposed in at least one of spaces between the first plate and the battery cell and between the second plate and the battery cell,
wherein the buffer pad is disposed to be in contact with the battery cell.

12. The apparatus of claim 11, wherein the buffer pad includes a foam sponge.

13. The apparatus of claim 2, further comprising a folding device disposed side by side with the carrier in the second direction for bending the at least portion of the casing of the battery cell which protrudes in the second direction outward of the first and the second plates.

14. The apparatus of claim 13, wherein the carrier further includes a protection member disposed between the first plate and the second plate and preventing the folding device from colliding with a body portion in which an electrode assembly of the battery cell is accommodated.

15. The apparatus of claim 14, wherein
the protective member is disposed on at least one side of the battery cell, and
a length of the protective member in the second direction is equal to or greater than a length of the first plate and the second plate in the second direction.
